# EUROPEAN PATENT SPECIFICATION

(11) **EP 0 674 441 B1**
(45) Date of publication and mention of the grant of the patent: **09.12.1998**
(21) Application number: 95103803.3
(22) Date of filing: 16.03.1995
(51) Int. Cl.: H04N 7/167

(54) **A method for scrambling a digitally transmitted television signal**
Verschlüsselungsverfahren für ein digital übertragenes Fernsehsignal
Procédé pour le brouillage d'un signal de télévision transmis de manière numérique

(30) Priority: 21.03.1994 FI 941315
(43) Date of publication of application: 27.09.1995
(73) Proprietor: NOKIA TECHNOLOGY GmbH, 75175 Pforzheim (DE)
(72) Inventor: Heikkinen, Ari, SF-24260 Salo (FI); Hiltunen, Reino, SF-24130 Salo (FI); Huuhtanen, Timo, SF-33720 Tampere (FI); Juhola, Janne, SF-33720 Tampere (FI)

(56) References cited:
- EP-A- 0 461 029
- EP-A- 0 506 435
- WO-A-94/10802
- WO-A-94/15437
- IEEE TRANSACTIONS ON CONSUMER ELECTRONICS, vol. 38, no. 3, August 1992 NEW YORK, NY, US, pages 188-194, XP 000311835 ANGEBAUD ET AL 'CONDITIONAL ACCESS MECHANISMS FOR ALL- DIGITAL BROADCAST SIGNALS'

## Description

The present invention relates to a method for scrambling a digitally transmitted television signal in which at least two different programs are transmitted via the same transmission channel as digital video data packets and the sound of the programs is transmitted via the same transmission channel as digital audio data packets.

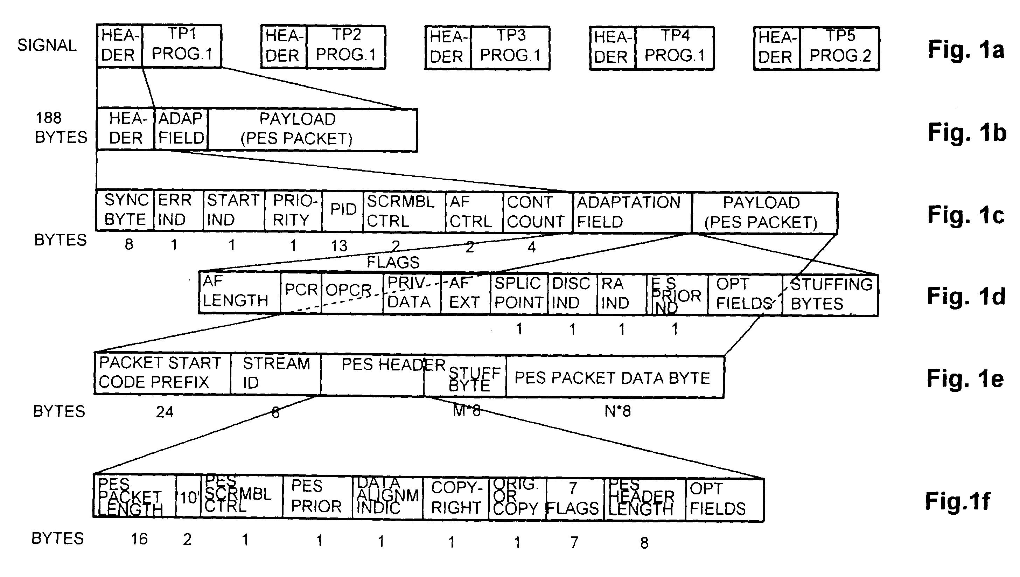

Future digital television systems enable simultaneous transmission of several programs via one transmission channel. Then the signal transmitted is in packet form and the transmission channel alternately contains packets of audio and video information of different programs. A video data packet usually includes picture information for several macro blocks that comprise 16 x 16 pixels. A macro block can be further divided into smaller picture blocks, and one picture block may comprise, say, 8 x 8 pixels. It is also possible to transmit data packets along with the programs. An example is the MPEG-2 (Motion Picture Experts Group) which is a generic standard for a video compression system enabling the transmission of a television image with a smaller number of bits than what would be needed if the television image were digitized into bits directly. Figures 1a to 1f illustrate the packet structure of the digital signal complying with the MPEG-2 standard. Figure 1a shows the highest-level packet structure of the transmitted signal at the transmission layer, where the packet structure enables simultaneous transmission of several programs on one transmission channel as the signal is divided into packets transmitted successively in time, each packet containing a header and the data part of the packet (TP, Transport Packet). In Figure 1a the first four blocks TP1 to TP4 include information related to program #1 and the fifth block TP5 information related to another program #2. Figure 1b shows the three main parts of a packet: the header, the adaptation field, and the PES (Program Elementary Stream) packet itself, ie. the payload. A packet comprises 188 bytes. Figure 1c shows in more detail the bytes included in the header and Figure 1d shows in more detail the bytes included in the adaptation field. Use of the adaptation field is optional. Figure 1e shows the bytes included in the PES packet and Figure 1f shows the bytes included in the PES header exluding the stuffing byte. The ISO/IEC 13818 standard describes the MPEG-2 standard in more detail.

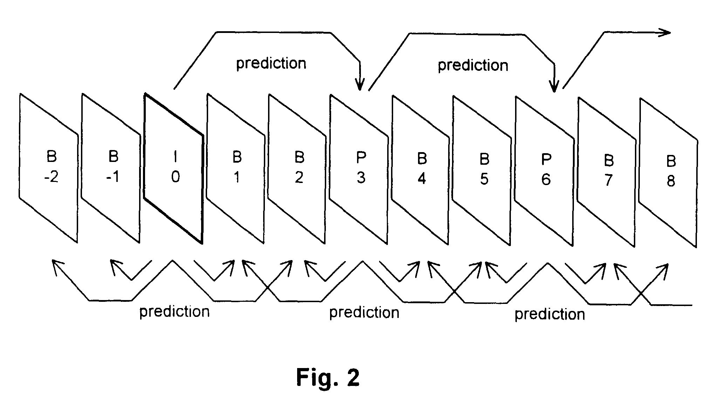

An example of video signal source coding is the MPEG-2 algorithm based on the use of discrete cosine transform (DCT), motion compensation, and variable length encoding. Some of the images included in the signal are encoded using only information internal to the image (intracoded, or, I images). Other images can be encoded using information included in the intracoded images. Only the motion vectors and prediction error are sent to the other images encoded. These images are decoded in a receiver from the intracoded images using the motion vectors, and the result is improved with the prediction error. Images predicted forward in time from I images are called P images. It is also possible to predict P images from the previous P image. The images between successive I and P images are so-called B images and they are predicted on the basis of the nearest preceding and nearest following P or I image. Figure 2 illustrates the prediction alternatives for B and P images appearing in an image sequence, where an arrow or arrows pointing to a particular image show the image on the basis of which said particular image can be predicted.

Compressive encoding makes the signal more susceptible to transmission errors. Therefore, receivers usually include error concealment features, which means that an attempt is made to hide the effect of errors detected in the transmission of the signal. Errors may be detected either in connection with channel decoding or inside the decoder.

Use of variable length code words in the coding results in that after a transmission error a receiver is unable to correctly decode the error-free bit stream following the error since the receiver lacks knowledge of where the next code word starts and how many code words were lost because of the error. That is why the bit stream includes certain reserved code words, start codes, to which the receiver can synchronize itself after a transmission error. In the proposed MPEG-2 standard, for example, the smallest entity to which a receiver may be synchronized after a transmission error is a slice. A slice means part of an image formed of a number of adjacent macro blocks. A slice may start from the beginning of an arbitrary macro block and continue up to the right border of the image. If the screen has 720 pixels horizontally, then the maximum length of a slice is 45 macro blocks. Therefore, after a transmission error, a receiver can correctly decode picture information only from the beginning of the next slice. Then the transmission error will typically appear in the image as a horizontal strip which has the height of a slice. The picture information corresponding to that strip is lost.

A receiver may attempt to correct the information in erroneous video packets by replacing said part of the image on the basis of the previous correctly decoded image, possibly using motion vectors.

The information in erroneous audio packets can be corrected by muting the receiver for the duration of the erroneous information.

Television system operators often want to implement a so-called pay television system, in which signal reception is allowed only for those viewers who specifically pay for the reception of a particular program. To that end, the signal is scrambled before transmission and the viewers who are paying for the service have a descrambling device attached to their receivers. The scrambling of a program is performed by adding in the transmission end a device that scrambles the signal using an encryption key. The signal is unscrambled in or prior to the receiver with a special descrambling device or module. Unscrambling can be done only if a receiver is provided with the information necessary for the unscrambling, i.e. the decryption keys.

Present scrambling methods used mainly in pay television applications are based on the scrambling of an analog video signal. These methods cannot be directly applied in future digital systems and they do not utilize the special features of digital transmission described above.

One known system for multiplexing a plurality of digital program services including encrypted or unencrypted services is described in WO-A-94 10802, published 11.05.94, after the priority date of the present application.

Pay television operators aim at a scrambling method that will provide a paying customer with a high-quality picture and sound, in other words, the scrambling may not spoil the program transmitted. It is also advantageous from an operator's point of view that a scrambled program can be viewed without descrambling but with a poor picture and/or sound quality. Then the quality of the picture and sound should be good enough for a viewer to get an idea of the programs provided by an operator but, on the other hand, poor enough so that the programs cannot be watched. Thus, a scrambled program is a way of advertising an operator's service to those viewers of the network who have not paid for the operator's services.

The above-mentioned WO-A-94 10802 does not describe how the known system of multiplexing digital program services could be modified to make the scrambling depth for each of these scrambled services variable to fulfill the mentioned pay television operators wish.

WO-A-94 15437, published 07.07.94, after the priority date of the present application, discloses a solution which can partly solve the above-mentioned objective.

WO-A-94 15437 describes a conditional access program broadcasting method enabling gradual access, and a gradual program access method, wherein partial access control messages are transmitted to enable a program to be unscrambled and partially restored by receivers having partial access rights and full access control messages are transmitted to enable a program to be unscrambled and fully restored by receivers having full access rights. This 2-level access control does not allow the variation of scrambling depth to other than these 2 levels and furthermore does not allow the partial restoration by receivers which have no access rights at all.

It is an object of the present invention to implement the scrambling of a digitally transmitted television signal in such a way that the picture and sound quality are good enough for a viewer to get an idea of the programs provided by an operator, but, on the other hand, poor enough so that the programs cannot be watched.

It is a further object of the present invention to make the scrambling depth variable. The present invention proposes a scrambling method simple to implement and explain. Despite the simplicity of the method unauthorized descrambling is impossible. The implementation of the scrambling requires no complex algorithm.

It is characteristic of the present invention that some of the transmitted data packets related to a particular program are scrambled and some of the transmitted data packets are not scrambled.

The present invention utilizes the packet form of the signal transmitted. Then the scrambling and descrambling are easy to implement and the scrambling depth can be varied. This means that it is possible to have a picture that can be viewed and listened to without descrambling but with a poor quality of the image and/or sound. However, the quality of the image/sound is good enough for a viewer to get an idea of the programs provided. It is also possible to have complete scrambling, in which case the program cannot be decoded without descrambling. The packet structure of a signal transmitted in packet form does not have to be opened for the scrambling and the scrambling depth for the signal can be varied by varying the proportion of the scrambled packets in the signal transmitted. In the MPEG-2 system, presented here as an example, it is possible to apply packet scrambling according to the invention e.g. to a highest-level packet, shown in Figure 1b, or to a PES packet, shown in Figure 1e.

Scrambling can be performed selectively for one or more programs transmitted simultaneously on a transmission channel and for the audio and/or video signal using encryption keys specific to each program.

The method according to the invention also makes it possible to control the quality of the scrambled picture and sound by adjusting the scrambling depth. The higher the number of packets scrambled, the poorer the quality of the picture and sound in receivers without descrambling. Selection of packets to be scrambled can be done in many ways. In order for the characteristics of a signal received without descrambling to be controllable, the methods should take into account a receiver's ability to hide packets that have been recognized erroneous (error concealment).

Various embodiments and details of the invention are described below with reference to the enclosed drawings, in which
- Figure 1a: illustrates the packet transmission of a combined digital signal complying with the MPEG-2 standard containing video, audio, and data information and the packet structure at the highest transmission level,
- Figure 1b: shows the main parts of a packet at the highest level of the MPEG-2 standard,
- Figure 1c: shows the detailed structure of the header part of a packet at the highest level of the MPEG-2 standard,
- Figure 1d: shows the detailed structure of the application field part of a packet at the highest level of the MPEG-2 standard,
- Figure 1e: shows the detailed structure of the PES packet part of a packet at the highest level of the MPEG-2 standard,
- Figure 1f: shows the detailed structure of the PES header in the PES packet shown in Figure 1e, exluding the stuffing byte,
- Figure 2: illustrates the image prediction and prediction order used in image coding according to the MPEG-2 standard,
- Figure 3: shows a television image scrambled according to an embodiment of the invention,
- Figure 4: shows a television image scrambled according to another embodiment of the invention,
- Figure 5: shows a television image scrambled according to yet another embodiment of the invention,
- Figure 6: shows a television image scrambled randomly according to the invention,
- Figure 7: shows a television image sequence scrambled according to an embodiment of the invention,
- Figure 8: shows a television image sequence scrambled according to another embodiment of the invention,
- Figure 9: shows in the form of a block diagram an example of how a scrambling and descrambling block according to the invention can be included in a digital television system,
- Figure 10: shows a block diagram of a device performing the scrambling according to the invention, and
- Figure 11: shows a block diagram of a device performing the descrambling according to the invention.

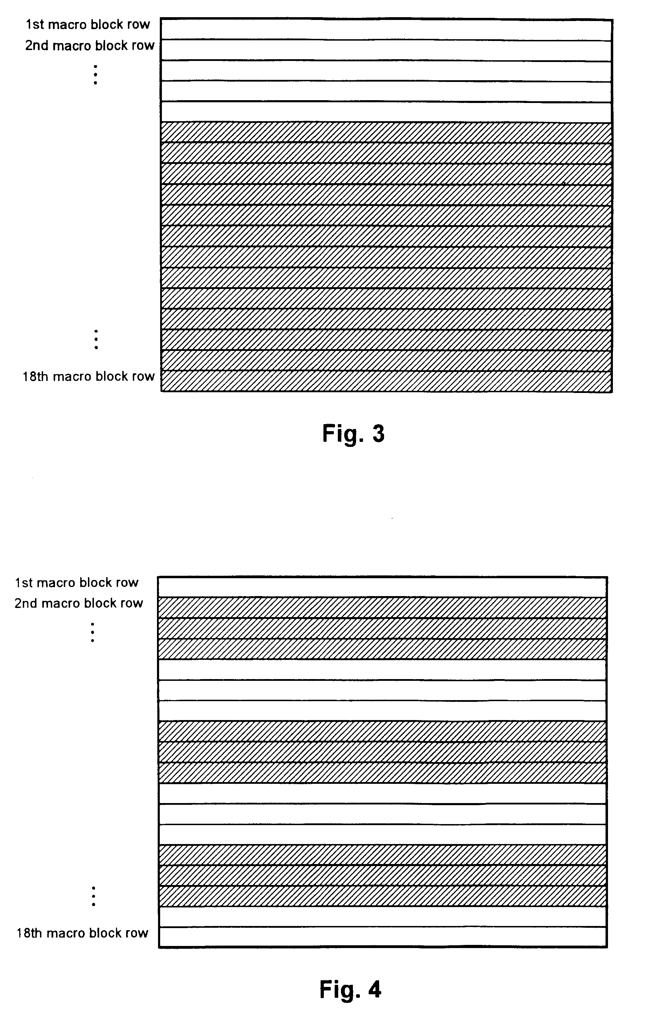

Figures 1a to 1f and 2 illustrating prior art were described above. The invention is described below with reference to Figures 3 to 11.

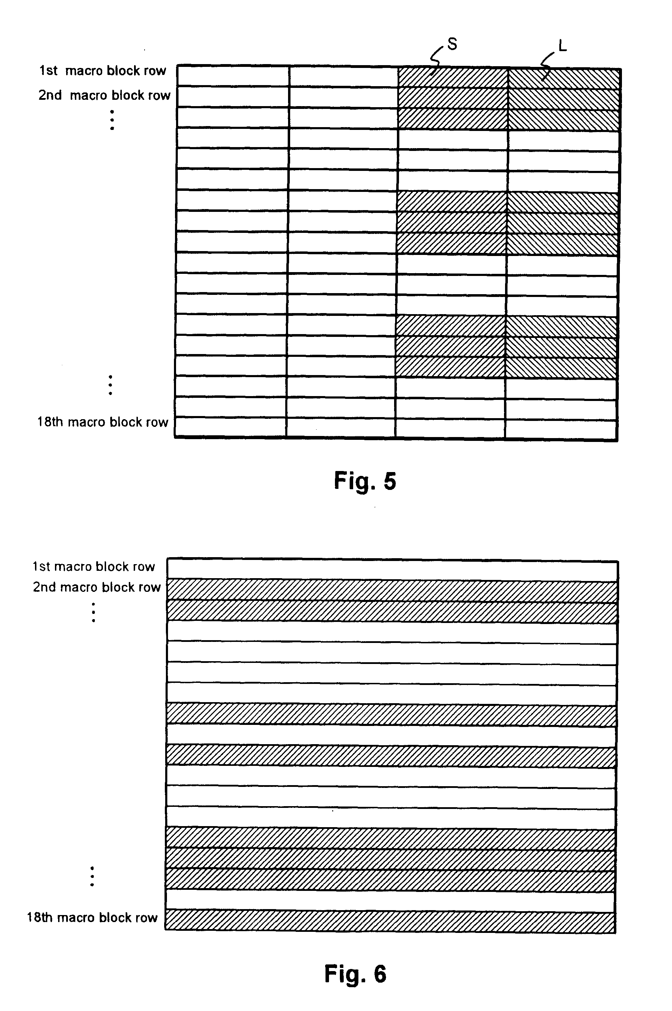

In the first embodiment of the invention a video signal is scrambled as follows. Packets (quantity and location) to be scrambled are selected in a predetermined manner, e.g. so that part of an image, ie. a certain number of packets, is transmitted non-scrambled, and the rest of the video signal packets are scrambled. This is accomplished by determining the location in a picture of a video packet arriving in the scrambling block and then deciding whether to scramble it or not. The non-scrambled part of the signal may be, for example, a strip in the upper part of the picture with the height of a quarter of the height of the whole picture, as shown in Figure 3, where the diagonally lineated blocks represent scrambled packets. Alternatively, the scrambling of the packets can be performed so that a predetermined number of packets are scrambled at predetermined intervals and a predetermined number of packets are left unscrambled, as shown in Figure 4. The packets are of variable lengths and usually contain the information of several macro blocks (16 x 16 pixels). Another alternative is to select for scrambling packets in a certain horizontal location in the picture, if the packets used comprise only part of the 16 lines. Then it is likely that the picture information of an image received without descrambling will also be lost for the part of of the picture that extends from the scrambling location to the right edge of the picture. This is due to the lost synchronization, as described in connection with the description of the compressive coding according to the MPEG-2 standard. This type of scrambling is illustrated in Figure 5, in which "S" refers to a scrambled packet and "L" refers to said picture information to the right of a scrambled packet, which also will be lost. The proportion and location of the non-scrambled image can be varied freely, thus controlling the scrambling depth. When scrambling variable length packets it is possible to make the whole strip erroneous (in a receiver uncapable of descrambling) by scrambling one packet of the strip only. This can be done by scrambling the packet in the beginning of the strip. Then, even if the packet did not comprise the whole strip, the picture information of the whole strip will be lost since one error prevents the decoding of the rest of the strip. In a receiver without a descrambler and decryption keys the error concealment function of the receiver is unable to compensate for the missing scrambled signal, except perhaps in a narrow zone at the border of the scrambled and non-scrambled image, since there is no correct information on the scrambled picture area in the receiver. If a receiver receives scrambled packets which it is not allowed to descramble, the descrambling block rejects these packets and they will appear as missing packets in the video decoding block. Then the video decoder tries to correct the errors caused by the missing packets.

In the second embodiment of the invention transmitted video packets are scrambled at random intervals, as shown in Figure 6. In practice, packets are selected according to an algorithm known to the scrambling block of the transmitter. In the descrambling block of a receiver, the scrambled blocks can be distinguished from the non-scrambled ones if the key set of the receiver includes the keys of the selection algorithm used. It is not necessary to have the key set and, hence, the keys of a selection algorithm, in the receiver, since the information about whether a packet is scrambled or not is sent to the receiver via the control bits in the packet. In a highest-level packet, ie. the TS packet, the information about the scrambling of the TS packet is sent to the receiver via the scrambling control bits of the TS packet (cf. Figure 1c, SCRMBL CTRL). Correspondingly, a PES packet includes control bits to inform a receiver about the scrambling. Therefore, there is no need for a separate algorithm in the receiver. Scrambling depth can be controlled by varying the proportion of scrambled and non-scrambled packets. In a picture received without descrambling, information in a scrambled packet will be lost; in addition, due to variable length encoding, also information in the following non-scrambled packets will be lost until there comes in the bit stream the next point to which the receiver can be synchronized. Hence, there will appear in an image received without descrambling horizontal strips where the picture information is lost. These strips have the height of one slice and start at random locations in the picture and extend toward the right edge of the picture. The error concealment function of a receiver can partially compensate for the missing information. Since, however, in this embodiment the scrambling is applied to the whole picture area, a sufficient scrambling can be achieved by adjusting the scrambling depth. This method can also be used for selecting audio packets to be scrambled.

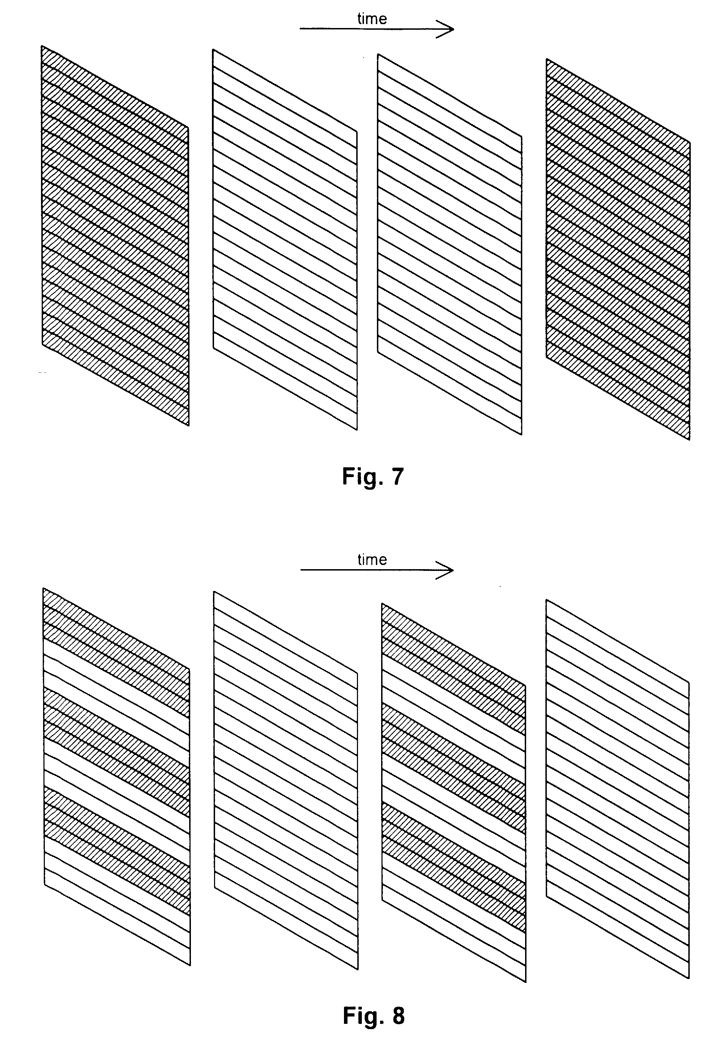

In the third embodiment of the invention, the scrambled part of the video signal is selected timewise, ie. by selecting certain images from the image sequence and scrambling all packets related to those images, as shown in Figure 7. Scrambling depth can be adjusted according to the type of images scrambled and to the intervals between scrambled and non-scrambled images in the image sequence. The most efficient scrambling is achieved by scrambling the intra-type images since they are used for computing all the other images. If the intra-images are scrambled in full, nothing can be decoded without the decryption keys. Scrambling of predicted images will result in a moderate scrambling since these images are used for computing only the interpolated images. Scrambling of interpolated images, ie. B and P images, will result in a light scrambling since these images are not used for computing other images. It is possible, for example, to transmit alternately sequences of scrambled and non-scrambled images or to transmit only the major part of the intracoded images scrambled. The alternation between scrambled and non-scrambled images can be chosen freely, thereby selecting different scrambling depths. A program received without descrambling will flicker on the receiver screen as the non-scrambled images appear sharp, but the reception of scrambled images will rapidly deteriorate the quality of the picture on the receiver screen. As this kind of flickering is particularly annoying for a viewer, it is easy to accomplish a sufficient scrambling.

In the fourth embodiment of the invention, the scrambled area is selected from the image sequence as the function of both time and place, as shown in Figure 8. Then, in a program received without descrambling there can be seen a non-scrambled area that moves around in the picture smoothly or by jumps, for example.

In the fifth embodiment of the invention, the inventive method of scrambling some of the packets transmitted is applied to the scrambling of audio packets. If we assume that packets TP1 to TP5 shown in Figure 1a are audio packets, then some of those consecutive audio packets are scrambled at predetermined intervals or at random intervals. Then an audio signal received without descrambling will sound fragmentary since the receiver will at times be muted because of the missing audio packets in the audio signal decoding.

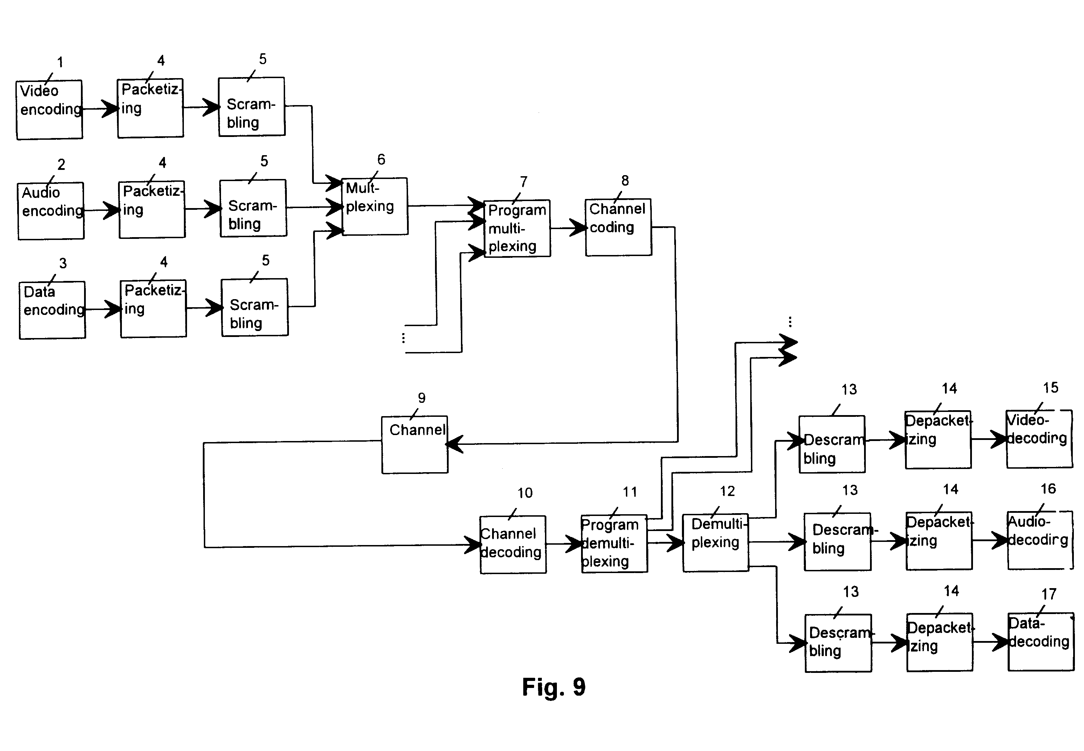

Figure 9 shows an example of how a scrambling and descrambling block according to the invention can be arranged in a television system. Blocks 1 to 8 are located at the transmit end (e.g. in a transmitter) and blocks 10 to 17 in the receive end (e.g. in a receiver). The video, audio, and data signals are source coded separately in blocks 1, 2, and 3. In block 4, the encoded signals are arranged into digital packets. In block 5, the audio and video signals are separately scrambled according to the invention. In block 6, the audio, video, and data signals related to a program are multiplexed together and, in block 7, several programs are multiplexed into one bit stream. Thus, there can be several parallel entities formed by blocks 1 to 6, ie. one entity per program, and these entities are multiplexed together in a program multiplexer 7 to be transmitted on the same transmission channel 9. In block 8, the resulting digital signal is channel encoded and modulated and sent to the transmission channel proper, represented by block 9, which can be, for example, a television cable network, satellite link or an antenna link between the transmitter and receiver. In block 10, the signal from the transmission channel is demodulated and channel decoded. In block 11, ie. in the program demultiplexer, the desired program is selected from the programs included in the bit stream for the appropriate channel and, in block 12, the audio, video, and data signals are demultiplexed into their respective branches. The descrambling according to the invention is carried out in block 13. The depacketization is performed in block 14, ie. the packets are converted into video, audio, and data bit streams, and the video, audio, and data signals are decoded separately in blocks 15 to 17.

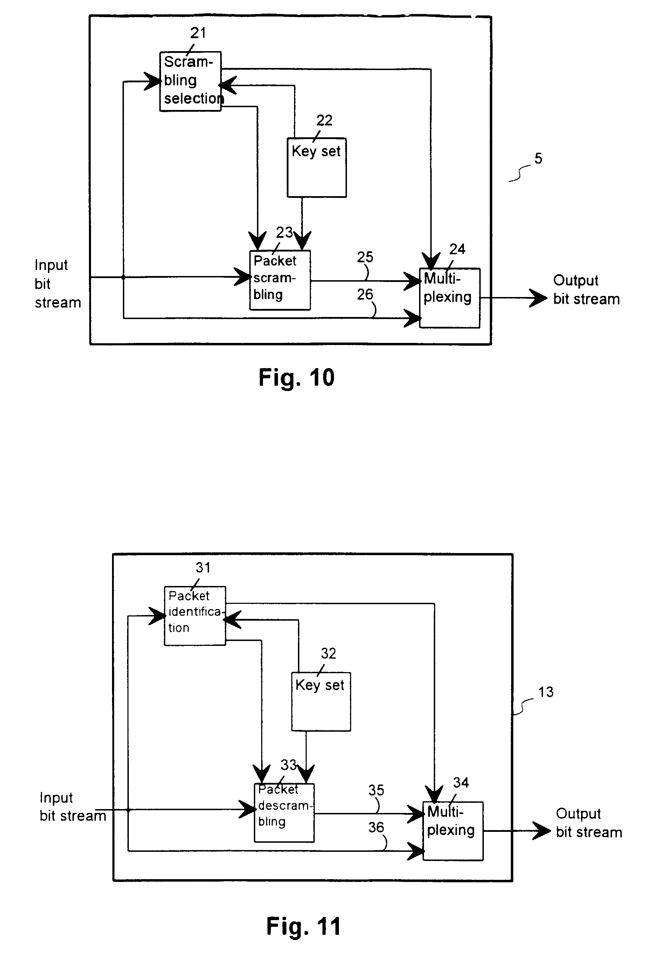

Figure 10 illustrates in the form of a block diagram an example of the implementation of an apparatus (block 5 in Figure 9) performing the scrambling. In addition to the audio/video signal the packets arriving in the scrambling block also include information on the location of each packet in the signal. In the scrambling decision and selection block 21, it is decided whether a packet will be scrambled or not. The decision is based on the information on the location of the arriving packet in the signal and on the selection method used. It is possible to use several different methods for the selection of packets; these methods will be further described later in this document. The information on the selection method used is obtained from the key set, ie. block 22, which includes the encryption keys. These keys will show which packets will be scrambled and how the scrambling is to be implemented. Alternatively, the scrambling information is included in the packet control bits, in which case the key set 22 is not needed. In block 23, the packet contents are scrambled, for which the key set 22 provides the encryption keys. The scrambling method may be any known scrambling method for a digital signal. A digital signal may be scrambled e.g. by inverting the bits: zeroes to ones and vice versa. This can be done with an exclusive OR function, for example. Multiplexer 24 decides on the basis of the decision made in block 21 whether an arriving packet is sent forward scrambled or non-scrambled, ie. whether the scrambled packet brought to the input 25 of the multiplexer or the non-scrambled packet brought to the other input 26 of the multiplexer is taken to the multiplexer output. This selection can as well be carried out in block 23, in which case a separate selection block 24 is not needed. The scrambling of transmitted packets at random intervals illustrated as the second embodiment of the invention can be implemented e.g. by having a random number generator in the scrambling decision and selection block 21 and a seed for the random number generator in the key set 22.

Figure 11 is a block diagram illustrating an example of the implementation of a descrambling device (block 13 in Figure 9). The packet detector 31 identifies the location of an arriving packet and on the basis of that information and the key obtained from the key set 32 determines whether the arriving packet is scrambled or not. The scrambled packets are descrambled in block 33 into which are brought for the descrambling the encryption keys from the key set 32. Multiplexer 34 determines on the basis of the decision made by the packet detector whether the arrived packet is let through as such (packets transmitted non-scrambled, which are brought to multiplexer input 36) or descrambled (packets transmitted scrambled, which are brought to multiplexer input 35). This selection can also be implemented inside block 33, in which case there is no need for a separate multiplexer 34. If the receiver is not allowed to descramble a packet, the packet will be rejected. Correspondingly, the descrambling of transmitted packets scrambled at random intervals illustrated as the second embodiment of the invention can be implemented e.g. by having a random number generator in the packet identification block 31 and, in the key set 32, the same seed as in the key set of the scrambling block. Then the output of the random number generator in the packet identification block 31 will contain the same sequence and numbers as the decision and selection block 21 and the packet identification block 31 will know when a scrambled packet is coming. Altenatively, the packet identification block 31 will know on the basis of the control bits in an arriving packet whether the packet is scrambled or not, in which case the key set 32 is not needed.

Although the invention is described above assuming that scrambled video packets are detected in the receiver, and a receiver which is not allowed to descramble scrambled packets rejects the scrambled packets, the invention is not limited to that particular case. The method of the invention is applicable also when receivers that are not allowed to descramble the scrambled packets do not recognize the packets as scrambled. Then the scrambling of the signal is in fact even more effective than in the case described above since a decoder will handle the information in the scrambled packets as if it were error-free. However, in practice video and audio decoders will often recognize the scrambled information as erroneous as the scrambling and variable length encoding will result in internal error conditions in audio and video decoders. When detecting such an error condition a decoder will recognize the arriving information as erroneous and start using the error concealment features of the decoder.

## Claims

1. A method for scrambling a digitally transmitted television signal in which at least two video programs are transmitted via the same transmission channel (9) as digital video data packets and the sound accompanying the programs is transmitted via the same transmission channel (9) as digital audio data packets, **characterized** in that some of the video data packets related to a particular program which are to be transmitted are scrambled and some are transmitted non-scrambled.

2. The method of claim 1, **characterized** in that a predetermined number of consecutive video data packets of a television image are transmitted non-scrambled and the rest of the video data packets of the television image are scrambled.

3. The method of claim 1, **characterized** in that randomly selected video data packets of a television image are transmitted scrambled and the rest of the video data packets of the television image are transmitted non-scrambled.

4. The method of claim 1, **characterized** in that a television image sequence is scrambled by scrambling the video data packets of predetermined television images.

5. The method of claim 4, **characterized** in that a television image sequence is scrambled by scrambling at least some of the video data packets of the intracoded images.

6. The method of claim 1, **characterized** in that a television image sequence is scrambled by scrambling predetermined video data packets of predetermined television images.

7. The method of claim 1, **characterized** in that a television image sequence is scrambled by randomly scrambling video data packets of randomly selected television images.

8. The method of claim 1, **characterized** in that the video data packets related to predetermined parts of a television image are transmitted non-scrambled.

9. The method of any one of the preceding claims, **characterized** in that the sound of the television transmission is scrambled by scrambling some of the audio data packets transmitted.

10. The method of any one of the preceding claims, **characterized** in that the television transmission comprises, in addition to the video and audio data packets, other data packets some of which are transmitted scrambled and some non-scrambled.

11. The method of any one of the preceding claims, **characterized** in that the television transmission comprises at least two different programs the data packets of which are transmitted interlaced.

12. A television transmitter comprising in parallel branches encoding means (1, 2, 3) for a video, audio, and data signal and packetizing means (4) to transmit each of the signals in data packets, with all branches combined by a multiplexer (6) and with the video data packets, audio data packets, and other data packets brought to the separate inputs of said multiplexer the combined output of which will yield a packet-form digital television image signal containing packets related to at least two different program transmissions, **characterized** in that each branch includes after the packetizing means (4) packet scrambling means (5) operative to scramble some of the packets related to a particular program, and not to scramble the remaining packets related to that program.

13. The television transmitter of claim 12, **characterized** in that the packet scrambling means (5) comprise a scrambling block (23) for the reception and scrambling of a packet, a scrambling decision and selection block (21) for the reception of a packet, connected in parallel to the input of the scrambling block (23), in which a decision is made about the scrambling of a packet and information about the decision is then taken to the packet scrambling block (23), and an encryption key set (22) containing information about the packets to be scrambled and the scrambling method, which informs the scrambling decision and selection block (21) about the packets to be scrambled and gives the encryption keys to the scrambling block (23).

14. A television receiver for the reception of digital television image signal transmitted in packet form, comprising a demultiplexer (12) to separate video packets, audio packets, and other data packets from packetized television image signal to respective branches, each of which comprises depacketizing means (14) and decoding means (15, 16, 17) for video, audio, and data signals, **characterized** in that there are in each branch before the depacketizing means (14) descrambling means (13) for identifying packets related to a particular program and for identifying the scrambled and non-scrambled packets related to the same transmission of the same program and for descrambling only the crambled packets.

15. The receiver of claim 14, **characterized** in that the descrambling means (13) comprise a descrambling block (33) for the reception and descrambling of a packet, a decryption key set (32) comprising the decryption keys with which the descrambling block (33) descrambles a scrambled packet, and a packet identification block (31) connected in parallel to the input of the descrambling block (33), which identifies the location of a packet and determines on the basis of the location and the decryption key read from the decryption key set (32), whether a received packet is scrambled or not, and sends that identification information to the descrambling block (33).

## Patentansprüche

1. Verfahren zum Verwürfeln eines digital übertragenen Femsehsignals, bei dem wenigstens zwei Videoprogramme über denselben Übertragungskanal (9) als digitale Videodatenpakete und der die Programme begleitende Ton über denselben Übertragungskanal (9) als digitale Audiodatenpakete übertragen werden, dadurch gekennzeichnet, daß einige der zu übertragenden Videodatenpakete in bezug auf ein bestimmtes Programm verwürfelt sind und einige unverwürfelt übertragen werden.

2. Verfahren nach Anspruch 1, dadurch gekennzeichnet, daß eine vorbestimmte Zahl aufeinanderfolgender Videodatenpakete eines Fernsehbildes unverwürfelt und die übrigen Videodatenpakete des Fernsehbildes verwürfelt übertragen werden.

3. Verfahren nach Anspruch 1, dadurch gekennzeichnet, daß zufallsmäßig ausgewählte Videodatenpakete eines Fernsehbildes verwürfelt und die übrigen Videodatenpakete des Fernsehbildes unverwürfelt übertragen werden.

4. Verfahren nach Anspruch 1, dadurch gekennzeichnet, daß eine Femsehbildfolge durch Verwürfeln der Videodatenpakete vorbestimmter Fernsehbilder verwürfelt wird.

5. Verfahren nach Anspruch 4, dadurch gekennzeichnet, daß eine Femsehbildfolge durch Verwürfeln von wenigstens einigen der Videodatenpakete der intracodierten Bilder verwürfelt wird.

6. Verfahren nach Anspruch 1, dadurch gekennzeichnet, daß eine Femsehbildfolge durch Verwürfeln vorbestimmter Videodatenpakete vorbestimmter Fernsehbilder verwürfelt wird.

7. Verfahren nach Anspruch 1, dadurch gekennzeichnet, daß eine Femsehbildfolge durch zufallsmäßiges Verwürfeln von Videodatenpaketen zufallsmäßig ausgewählter Fernsehbilder verwürfelt wird.

8. Verfahren nach Anspruch 1, dadurch gekennzeichnet, daß die Videodatenpakete in bezug auf vorbestimmte Teile eines Fernsehbildes unverwürfelt übertragen werden.

9. Verfahren nach einem der vorherigen Ansprüche, dadurch gekennzeichnet, daß der Ton der Fernsehübertragung durch Verwürfeln von einigen der übertragenen Audiodatenpakete verwürfelt wird.

10. Verfahren nach einem der vorherigen Ansprüche, dadurch gekennzeichnet, daß die Fernsehübertragung zusätzlich zu den Video- und Audiodatenpaketen weitere Datenpakete umfaßt, von denen einige verwürfelt und einige unverwürfelt übertragen werden.

11. Verfahren nach einem der vorherigen Ansprüche, dadurch gekennzeichnet, daß die Fernsehübertragung wenigstens zwei unterschiedliche Programme umfaßt, deren Datenpakete im Zeilensprungverfahren übertragen werden.

12. Fernsehsender, umfassend in parallelen Zweigen Codierungsmittel (1, 2, 3) für ein Video-, Audio- und Datensignal und ein Paketierungsmittel (4) zum Übertragen jedes der Signale in Datenpaketen, wobei alle Zweige von einem Multiplexer (6) kombiniert werden und wobei die Videodatenpakete, Audiodatenpakete und anderen Datenpakete zu den separaten Eingängen des genannten Multiplexers gebracht werden, dessen kombinierter Ausgang ein paketförmiges digitales Femsehbildsignal ergibt, das Pakete in bezug auf wenigstens zwei verschiedene Programmübertragungen enthält, dadurch gekennzeichnet, daß jeder Zweig hinter dem Paketierungsmittel (4) ein Paketverwürfelungsmittel (5) beinhaltet, das die Aufgabe hat, einige der Pakete in bezug auf ein bestimmtes Programm zu verwürfeln und die übrigen Pakete in bezug auf dieses Programm nicht zu verwürfeln.

13. Fernsehsender nach Anspruch 12, dadurch gekennzeichnet, daß das Paketverwürfelungsmittel (5) folgendes umfaßt: einen Verwürfelungsblock (23) zum Empfangen und Verwürfeln eines Pakets, einen Verwürfelungsentscheidungs- und -auswahlblock (21) zum Empfangen eines Pakets, der parallel zum Eingang des Verwürfelungsblockes (23) geschaltet ist und in dem eine Entscheidung über das Verwürfeln eines Pakets getroffen wird und Informationen über die Entscheidung dann zum Paketverwürfelungsblock (23) gesendet werden, und einen Verschlüsselungscodesatz (22) mit Informationen über die zu verwürfelnden Pakete und das Verwürfelungsverfahren, durch den der Verwürfelungsentscheidungs- und -auswahlblock (21) über die zu verwürfelnden Pakete informiert wird und der die Verschlüsselungscodes an den Verwürfelungsblock (23) gibt.

14. Fernsehempfänger zum Empfangen eines in Paketform übertragenen digitalen Fernsehbildsignals, umfassend einen Demultiplexer (12) zum Trennen von Videopaketen, Audiopaketen und anderen Datenpaketen aus einem paketierten Fernsehbildsignal in jeweilige Zweige, die jeweils ein Entpaketierungsmittel (14) und ein Decodierungsmittel (15, 16, 17) für Video-, Audio- und Datensignale umfassen, dadurch gekennzeichnet, daß in jedem Zweig vor dem Entpaketierungsmittel (14) ein Entwürfelungsmittel (13) zum Identifizieren von Paketen in bezug auf ein bestimmtes Programm und zum Identifizieren der verwürfelten und unverwürfelten Pakete in bezug auf dieselbe Übertragung desselben Programmes und zum Entwürfeln nur der verwürfelten Pakete vorhanden ist.

15. Empfänger nach Anspruch 14, dadurch gekennzeichnet, daß das Entwürfelungsmittel (13) folgendes umfaßt: einen Entwürfelungsblock (33) zum Empfangen und Entwürfeln eines Paketes, einen Entschlüsselungscodesatz (32) mit den Entschlüsselungscodes, mit denen der Entwürfelungsblock (33) ein verwürfeltes Paket entwürfelt, und einen Paketidentifizierungsblock (31), der parallel zum Eingang des Entwürfelungsblockes (33) geschaltet ist, und den Ort eines Paketes identifiziert und auf der Basis des Ortes und des von dem Entschlüsselungscodesatz (32) gelesenen Entschlüsselungscodes ermittelt, ob ein empfangenes Paket verwürfelt ist oder nicht, und der diese Identifikationsinformationen zu dem Entwürfelungsblock (33) sendet.

## Revendications

1. Procédé pour brouiller un signal de télévision transmis numériquement dans lequel au moins deux programmes vidéo sont transmis par l'intermédiaire du même canal de transmission (9) comme des paquets de données vidéo numériques et le son accompagnant les programmes est transmis par l'intermédiaire du même canal de transmission (9) comme des paquets de données audio numériques, caractérisé en ce que certains des paquets de données vidéo associés à un programme particulier qui doivent être transmis sont brouillés et certains sont transmis sans être brouillés.

2. Procédé selon la revendication 1, caractérisé en ce qu'un nombre prédéterminé de paquets de données vidéo consécutifs d'une image de télévision sont transmis sans être brouillés et le reste des paquets de données vidéo de l'image de télévision est brouillé.

3. Procédé selon la revendication 1, caractérisé en ce que des paquets de données vidéo sélectionnés aléatoirement d'une image de télévision sont transmis en étant brouillés et le reste des paquets de données vidéo de l'image de télévision est transmis sans être brouillé.

4. Procédé selon la revendication 1, caractérisé en ce qu'une séquence d'images de télévision est brouillée par brouillage des paquets de données vidéo d'images de télévision prédéterminées.

5. Procédé selon la revendication 4, caractérisé en ce qu'une séquence d'images de télévision est brouillée par brouillage d'au moins certains des paquets de données vidéo des images intracodées.

6. Procédé selon la revendication 1, caractérisé en ce qu'une séquence d'images de télévision est brouillée par brouillage de paquets de données vidéo prédéterminés d'images de télévision prédéterminées.

7. Procédé selon la revendication 1, caractérisé en ce qu'une séquence d'images de télévision est brouillée en brouillant aléatoirement des paquets de données vidéo d'images de télévision sélectionnées aléatoirement.

8. Procédé selon la revendication 1, caractérisé en ce que les paquets de données vidéo associés à des parties prédéterminées d'une image de télévision sont transmis sans être brouillés.

9. Procédé selon l'une quelconque des revendications précédentes, caractérisé en ce que le son de la transmission de télévision est brouillé en brouillant certains des paquets de données audio transmis.

10. Procédé selon l'une quelconque des revendications précédentes, caractérisé en ce que la transmission de télévision comprend, outre les paquets de données vidéo et audio, d'autres paquets de données dont certains sont transmis brouillés et certains non brouillés.

11. Procédé selon l'une quelconque des revendications précédentes, caractérisé en ce que la transmission de télévision comprend au moins deux programmes différents dont les paquets de données sont transmis entrelacés.

12. Émetteur de télévision comprenant dans des branches parallèles des moyens de codage (1, 2, 3) pour un signal vidéo, audio et de données et des moyens de mise en paquets (4) pour transmettre chacun des signaux dans des paquets de données, toutes les branches étant combinées par un multiplexeur (6) et les paquets de données vidéo, les paquets de données audio, et d'autres paquets de données étant acheminés aux entrées séparées dudit multiplexeur dont la sortie combinée donnera un signal d'image de télévision numérique sous forme de paquets contenant des paquets associés à au moins deux transmissions de programmes différents, caractérisé en ce que chaque branche comporte, après les moyens de mise en paquets (4), des moyens de brouillage de paquets (5) ayant pour fonction de brouiller certains des paquets associés à un programme particulier, et de ne pas brouiller les paquets restants associés à ce programme.

13. Émetteur de télévision selon la revendication 12, caractérisé en ce que les moyens de brouillage de paquets (5) comprennent un bloc de brouillage (23) pour la réception et le brouillage d'un paquet, un bloc de décision et de sélection de brouillage (21) pour la réception d'un paquet, connecté en parallèle à l'entrée du bloc de brouillage (23) dans lequel une décision est prise en ce qui concerne le brouillage d'un paquet et les informations concernant la décision sont transférées au bloc de brouillage de paquet (23), et un ensemble de clés de cryptage (22) contenant des informations concernant les paquets devant être brouillés et le procédé de brouillage, qui informe le bloc de décision et de sélection de brouillage (21) en ce qui concerne les paquets devant être brouillés et fournit les clés de cryptage au bloc de brouillage (23).

14. Récepteur de télévision pour la réception d'un signal d'image de télévision numérique transmis sous forme de paquets, comprenant un démultiplexeur (12) pour séparer des paquets vidéo, des paquets audio, et d'autres paquets de données d'un signal d'image de télévision sous forme de paquets vers des branches respectives dont chacune comprend des moyens de dépaquetage (14) et des moyens de décodage (15, 16, 17) pour des signaux vidéo, audio et de données, caractérisé en ce qu'il y a dans chaque branche, avant les moyens de dépaquetage (14), des moyens de désembrouillage (13) pour identifier des paquets associés à un programme particulier et pour identifier les paquets brouillés et non brouillés associés à la même transmission du même programme et pour désembrouiller uniquement les paquets brouillés.

15. Récepteur selon la revendication 14, caractérisé en ce que les moyens de désembrouillage (13) comprennent un bloc de désembrouillage (33) pour la réception et le désembrouillage d'un paquet, un ensemble de clés de décryptage (32) comprenant les clés de décryptage avec lesquelles le bloc de désembrouillage (33) désembrouille un paquet brouillé, et un bloc d'identification de paquet (31) connecté en parallèle à l'entrée du bloc de désembrouillage (33), qui identifie la position d'un paquet et détermine, sur la base de la position et de la clé de décryptage lue dans l'ensemble de clés de décryptage (32), si un paquet reçu est brouillé ou non, et envoie cette information d'identification au bloc de désembrouillage (33).
